**Europäisches Patentamt**

**European Patent Office**

**Office européen des brevets**

(11) Publication number: **0 023 893**
A2

(12) # EUROPEAN PATENT APPLICATION

(21) Application number: **80830054.5**

(22) Date of filing: **21.07.80**

(51) Int. Cl.³: **B 62 K 25/20**

(30) Priority: **07.08.79 IT 6862979**

(71) Applicant: **GILARDINI S.p.a., Via Campana 12, I-10125 Torino (IT)**

(43) Date of publication of application: **11.02.81 Bulletin 81/6**

(72) Inventor: **Mangini, Leonardo, 72, Via Belfiore, I-10126 Torino (IT)**

(74) Representative: **Jacobacci, Filippo et al, c/o Jacobacci-CASETTA & PERANI S.n.c. Via Alfieri, 17, I-10121 Torino (IT)**

(84) Designated Contracting States: **AT DE FR GB SE**

(54) **Motor cycle with swinging fork rear suspension.**

㊄ A motor cycle, with a reliable, sturdy swinging fork rear suspension which allows a reduction in the non-suspended weight of the motor cycle, includes a rotary hydraulic shock absorber (28) which is fixed to the motor cycle frame (10) and has a rotor shaft which constitutes the pivot (12) of the fork (14) on the frame (10). The pivoted end of the fork (14) comprises a pair of appendages (26) which project in the opposite direction to the wheel-bearing arms (16) of the fork (14).

- 1 -

"Motor cycle with swinging fork rear suspension"

The present invention relates to a motor cycle having
a frame, a suspension for the rear wheel comprising a
fork mounted rotatable on a transverse pivot pin carried by the frame, and resilient suspension means and
shock absorber means interposed between the fork and
the motor cycle frame.

The object of the present invention is to provide a
motor cycle having a rear suspension of the aforesaid
type which will be particularly sturdy, reliable and
economical, and which will allow a noticeable reduction in the non-suspended weight of the motor cycle,
compared with the conventional kind wherein the shock
absorber means generally comprise one or two oleodynamic or oleopneumatic telescopic shock absorbers
articulated at one end to the fork and at the other
end to the motor cycle frame.

With this object in view, the present invention provides a motor cycle having a rear wheel suspension of
the aforesaid type, characterised in that the shock
absorber means comprise a single rotary hydraulic
shock absorber, having its axis parallel to the pivot pin of the fork, and including a fixed member fixed to the motor cycle frame and a rotor rotatable relative to the fixed member and driven in rotation by the fork.

In the following description and claims, the term "hydraulic shock absorber" means either an oleodynamic shock absorber or an oleopneumatic shock absorber.

Preferably, the axis of the rotary hydraulic shock absorber coincides with the axis of the pivot pin of the fork.

According to a preferred embodiment of the invention, the fixed member of the rotary shock absorber, which is fixed to the frame of the motor cycle, comprises a cylindrical casing of the shock absorber, and the fork has two appendages opposite the arms bearing the spindle of the rear wheel, the two appendages being fixed to the two ends of the shaft of the rotor of the hydraulic rotary shock absorber projecting from the two ends of the casing of the shock absorber, so that the shaft of the rotor of the shock absorber constitutes the pivot pin of the fork.

Further characteristics of the invention will become apparent in the course of the detailed description which follows, with reference to the accompanying drawings supplied purely by way of non-limitative example, in which:

Figure 1 is a diagrammatic side view of a portion of a motor cycle according to the invention;

Figure 2 is a diagrammatic plan view of a part of Figure 1;

Figure 3 is a cross-section taken along the line III-III of Figure 2, and

Figure 4 is a variation of Figure 1.

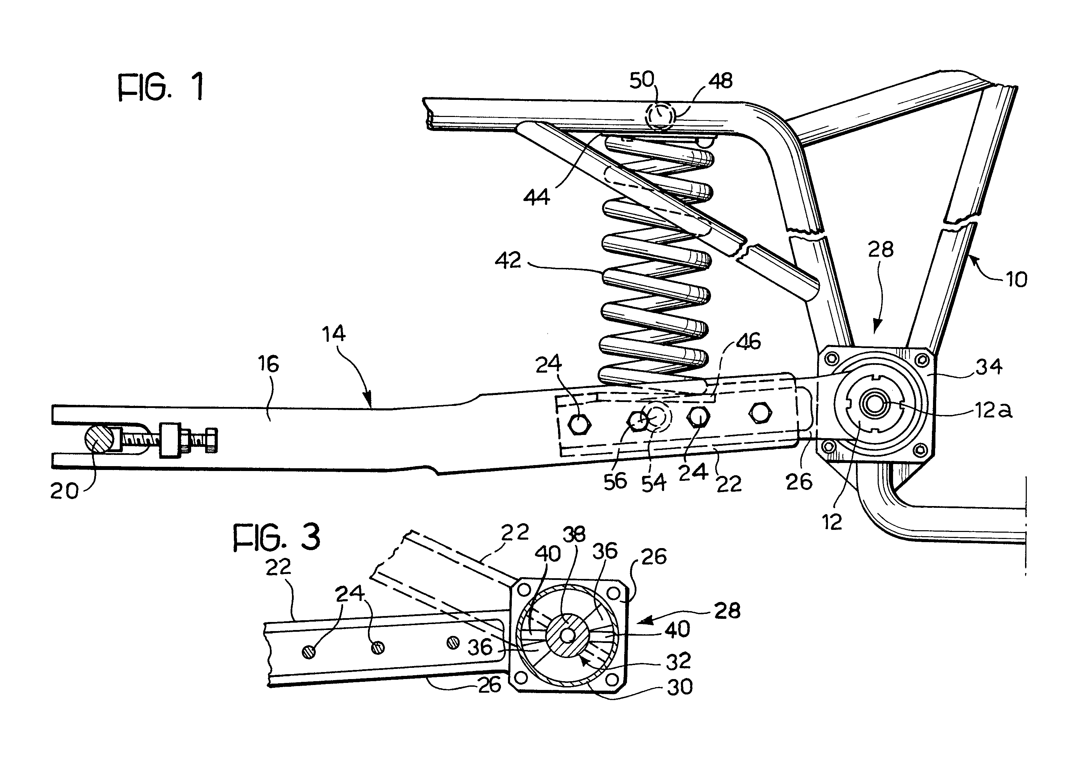

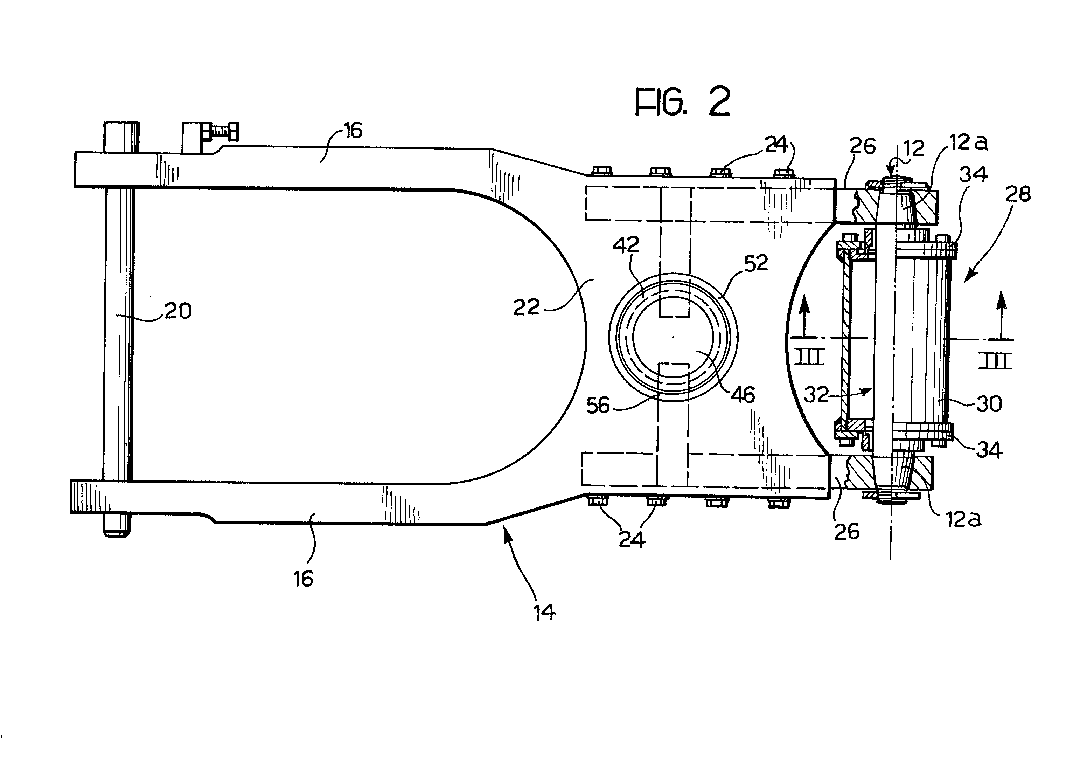

With reference to Figures 1 to 3, there is shown, generally indicated 10, a motor cycle frame comprising a number of metal tubes joined together by welding. A fork 14 is articulated to a lower portion of the frame 10 about a transverse pin 12. The fork 14 has two arms 16 bearing at their free ends a transverse spindle 20 which supports rotatable the rear wheel of the motor cycle, not shown in the drawings. The opposite ends of the arms 16 are connected to a housing portion 22 of the fork 14, within which are fixed detachably, by means of screws 24, a pair of appendages 26 which project outwardly of the fork 14 on the opposite side to the arms 16. The free ends of the appendages 26 are fixed, by means of releasable taper-fitting couplings, to the ends 12a of the pivot pin 12 of the fork 14.

With the fork 14 there is associated a rotary hydraulic shock absorber 28, of known type, fixed transversely to the frame of the motor cycle. The rotary shock absorber 28 may be, for example, of the type illustrated in R. BUSSIEN "AUTOMOBILTECHNISCHES HANDBUCH", TECHNISCHER VERLAG HERBERT CRAM, BERLIN 1935 VOL. 1, p. 706 Figures 52b and 52c. The rotary shock absorber 28 comprises a cylindrical casing 30 and a rotor 32 mounted coaxially for rotation within the casing 30. The casing 30 is provided at its ends with a pair of plates or end walls 34 for its attachment to the frame 10 of the motor cycle, and has internally a pair of opposing radial projections 36 extending longitudinally. The end walls 34 are traversed sealingly by the pivot pin 12 of the fork 14, the part of the pin within the casing 30 constituting the shaft 38 of the rotor 32. The shaft 38, the outer surface of which is in contact with the corresponding inner surfaces of the projections 36, is provided with a pair of opposing, longitudinally-extending radial fins 40 having calibrated ports, not shown, which during rotation of the shaft 38, permit restricted flow of a damping liquid contained in the casing 30.

The fork 14 is suspended from the upper part of the frame 10 by a helical suspension spring 42, the ends of which react against a pair of upper and lower plates 44, 46 respectively. An eyelet 48 is fixed to the upper plate 44 for the rotatable engagement of a transverse pivot pin 50 carried by the frame 10. The lower plate 46 is fitted, with clearance, into a central hole 52 in the upper face of the portion 22 of the fork 14, and is provided beneath with an eyelet 54 for the rotatable engagement of a transverse pivot pin 56 carried by the fork 14.

Preferably the rotary shock absorber 28 is compensated

- 5 -

0023893

thermostatically in both rotating directions of the rotor 32, corresponding respectively to the compression and distension of the suspension spring 42.

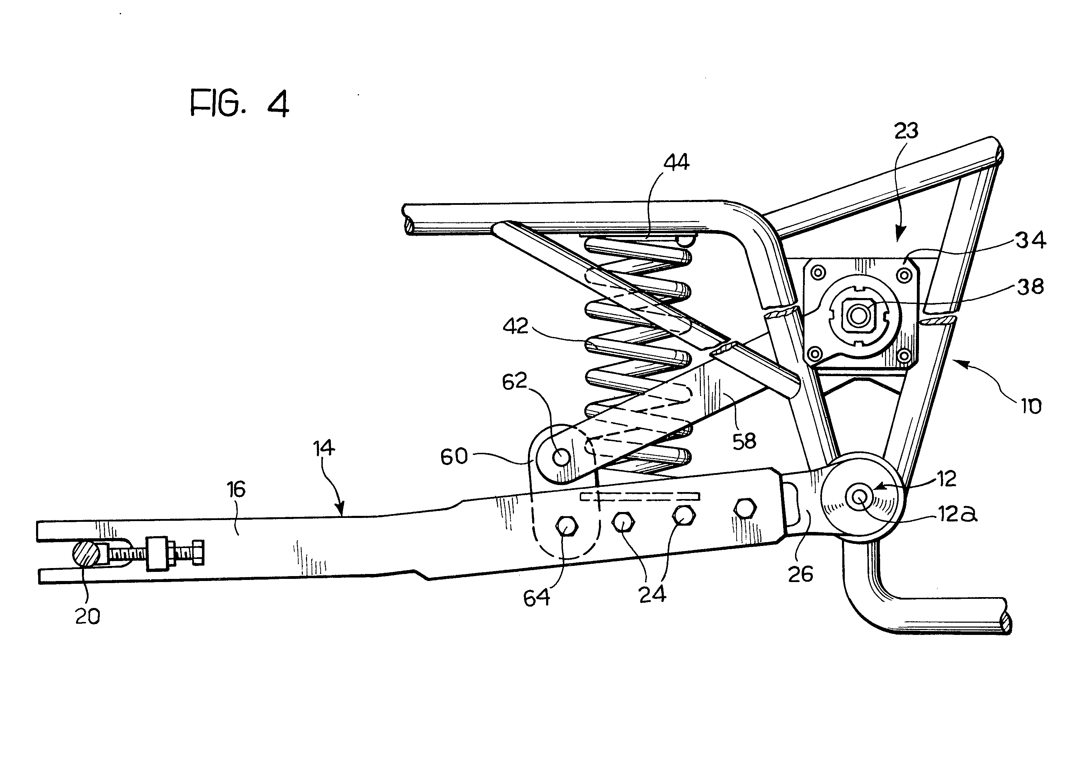

The variant illustrated in Figure 4 differs from the embodiment previously described only in the fact that the axis of the rotary hydraulic shock absorber 28 is spaced from the axis of the pivot pin 12 of the fork 14. In this variant, in fact, the rotary hydraulic shock absorber 28 is situated above the pivot pin 12 and has its axis arranged in a vertical plane containing the axis of the pin 12. The ends of the shaft 38 of the rotor 32 of the shock absorber 28 are fixed to a pair of levers 58 each of which is articulated about a transverse pivot pin 62 at its free end to one end of a link rod 60.

The other end of each link rod 60 is articulated to the portion 22 of the fork 14 about a transverse pivot pin 64. In this way the rotation of the fork 14 is transmitted to the shaft 38 of the shock absorber 28 by the levers 58 and the link rods 60.

Naturally, while the principle of the invention remains unchanged, the details of construction and embodiment may be varied widely in relation to what has been described and illustrated, without nevertheless going beyond the scope of the present invention. It is possible therefore to offer variants of the invention which differ from the forms of embodiment illustrated either as regards the position of the

0023893

rotary shock absorber or as regards the conformation, the arrangement and number of the resilient suspension members of the fork 14.

- 7 -    0023893

CLAIMS:

1. Motor cycle having a frame (10), a suspension for the rear wheel comprising a fork (14) mounted rotatably on a transverse pivot pin (12) carried by the frame (10), and resilient suspension means (42) and shock absorber means (28) interposed between the fork (14) and the frame (10) of the motor cycle, characterised in that the shock absorber means comprise a single hydraulic rotary shock absorber (28) having its axis parallel to the pivot pin (12) of the fork (14) and including a fixed member (30) fixed to the frame (10) of the motor cycle, and a rotor (32) rotatable relative to the fixed member (30) and driven in rotation by the fork (14).

2. Motor cycle according to Claim 1, characterised in that the axis of the rotary hydraulic shock absorber (28) coincides with the axis of the pivot pin (12) of the fork (14)

3. Motor cycle according to Claims 1 and 2, characterised in that the fixed member of the rotary shock absorber (28) which is fixed to the frame (10) of the motor cycle comprises of a cylindrical casing (30) of the shock absorber (28), and in that the fork (14) has two appendages (26) opposite to the arms (16) carrying the spindle (20) of the rear wheel, the two appendages (26) being fixed to the two ends (12a) of the shaft (38) of the rotor (32) of the rotary hydraulic shock absorber (28) projecting from the two ends of the casing (30) of the shock absorber (28), so that the shaft (38) of the rotor (32) of the shock absorber (28) constitutes the pivot pin (12) of the fork (14).

4. Motor cycle according to Claim 3, characterised in that the two appendages (26) of the fork (14) are fixed to the ends (12a) of the shaft (38) of the rotor (32) of the shock absorber (28) by taper-fitting couplings and in that at least one of the appendages (26) is fixed releasably to the fork (14).

5. Motor cycle according to Claim 1, characterised in that the axis of the rotary hydraulic shock absorber (28) is spaced from the axis of the pivot pin (12) of the fork (14).

6. Motor cycle according to Claim 5 characterised in that the rotary hydraulic shock absorber (28) is positioned above the pivot pin (12) of the fork (14).

7. Motor cycle according to Claims 5 or 6, characterised in that the axis of the rotary hydraulic shock absorber (28) lies on a substantially vertical plane containing the axis of the pivot pin (12) of the fork (14).

8. Motor cycle according to one of the Claims 5 to 7, characterised in that the rotor (32) of the rotary hydraulic shock absorber (28) is connected to the fork (14) by a pair of levers (58) fixed to the ends of the shaft (38) of the rotor (32) and a pair of link rods

- 9 -

0023893

(60) each of which is articulated at one end to the fork (14) and at the other end to one of the two levers (58).

9.   Motor cycle according to one of the preceding claims, characterised in that the resilient suspension means comprise a single helical spring (42) interposed between the fork (14) and the frame (10) of the motor cycle.

10.   Motor cycle according to Claim 9, characterised in that the two ends of the helical spring (42) react against two plates (44, 46) articulated respectively to the fork (14) and to the frame (10) of the motor cycle about axes parallel to the axis of rotation of the fork (14).

FIG. 1

FIG. 3

FIG. 2

0023893

FIG. 4